# EUROPÄISCHE PATENTSCHRIFT

(11) **EP 1 359 078 B1**
(45) Veröffentlichungstag und Bekanntmachung des Hinweises auf die Patenterteilung: **29.11.2006**
(21) Anmeldenummer: 03003982.0
(22) Anmeldetag: 22.02.2003
(51) Int. Cl.: B60T 8/00, B60T 8/26, B60T 17/22, B60T 8/32, B60T 13/68

(54) **Verfahren und Anordnung zur Zuspannenergieregelung bei elektronisch geregelten Bremssystemen von Fahrzeugen**
Method and apparatus for controlling the brake application energy of electronic controlled braking systems of vehicles
Procédé et dispositif de commande d'énergie d'actionnement de frein des systèmes de freinage à commande électronique pour véhicules

(30) Priorität: 29.04.2002 DE 10219067
(43) Veröffentlichungstag der Anmeldung: 05.11.2003
(73) Patentinhaber: WABCO GmbH & Co. OHG, 30453 Hannover (DE)
(72) Erfinder: Eckert, Horst, 31547 Rehburg-Loccum (DE); Gaulke, Arnd, 30952 Ronnenberg (DE)
(74) Vertreter: Schrödter, Manfred

(56) Entgegenhaltungen:
- EP-A- 0 288 846
- DE-A- 4 007 360
- DE-A- 4 142 670
- DE-A- 4 208 581
- DE-A- 4 224 971
- DE-A- 10 012 448
- US-A- 4 790 606

## Beschreibung

Die Erfindung betrifft ein Verfahren zur Zuspannenergieregelung bei elektronisch geregelten Bremssystemen (EBS-Systemen) von Fahrzeugen gemäß Oberbegriff des Anspruchs 1 sowie eine Anordnung zur Durchführung des Verfahrens.

Bei EBS-Systemen werden bekanntlich der Bremsbelagverschleiß und das Adhäsionsverhältnis zwischen Fahrzeugrad und Fahrbahn bzw. der Kraftschlussbeiwert zwischen Rad und Fahrbahn geregelt, wobei im Bereich geringer Abbremsung der Verschleiß und im Bereich hoher Abbremsung die Adhäsion geregelt wird.

Betätigt der Fahrer das Bremspedal werden zuerst bis zu einem vorgebbaren Fahrer-Sollbremswert Bremsdrücke ausgesteuert, die ausschließlich nach Belagverschleißregelkriterien berechnet werden. In diesem Anfangsbereich wird bei den Berechnungen keine Rücksicht auf Achslasten genommen. Bei Überschreitung des Fahrer-Sollbremswertes wechselt das Regelsystem vom Belagverschleißregelungsbereich in den Adhäsionsregelbereich über. In diesem höheren Abbremsungsbereich überwiegen Komfort- und Sicherheitsaspekte gegenüber dem Verschleißaspekt. Das Regelungsziel im Adhäsionsregelbereich ist gleicher Bremsschlupf für alle Räder. Im Adhäsionsregelbereich werden Achslasten bei der Bremsdruckerechnung und -regelung berücksichtigt. Die in den Bremsen umzusetzende Bewegungsenergie zwischen den Achsen ist nicht mehr gleich. Werden definierte Differenzschlupfschwellen vor Erreichen des Fahrer-Sollbremswertes überschritten, erfolgt der Wechsel auch schon früher. Im Adhäsionsregelbereich ist gleiche Adhäsion, d. h. ein Differenzschlupf zwischen den Achsen von Null, das Regelungsziel.

Wenn bspw. ein vollbesetzter Bus eine Gefällestrecke herunter fährt, wird der Busfahrer seine Bremse in der Regel häufiger einsetzen müssen mit der Folge, dass die Bremsen zwangsläufig mehr oder weniger schnell heiß bzw. heißer werden. Mit heißer werdender Bremse sinkt der Reibbeiwert (µ-Wert) der Bremsenreibpaarung (Bremsbelag/Bremsscheibe oder Bremsbelag/Bremstrommel), und zwar um bis zu 100 %. Ein Abfallen des Reibbeiwertes der Reibpaarung bedeutet weniger Bremskraft der Bremse.

Sind die Bremsen zwischen der Vorderachse und der Hinterachse unterschiedlich heiß, was in der Regel der Fall ist, ist dort die Bremskraftabnahme am größten, wo die Temperatur am höchsten ist. Es baut sich also ein vom Normalzustand abweichender Differenzschlupf auf. Ein solcher Differenzschlupf wird vom EBS-System ausgeregelt, dessen Regelungsziel ein Differenzschlupf von Null ist.

Normalerweise sind bei einem Nutzkraftwagen, insbesondere Lastkraftwagen und Bus, die Kühlverhältnisse für die Hinterachs-Bremsen schlechter als für die Vorderachs-Bremsen. Ferner sind regelmäßig die Hinterachslasten um ca. 50 - 100 % größer als die Vorderachslasten. Dies bedeutet, dass die Hinterradbremsen stets heißer sein werden als die Vorderradbremsen - auch schon im Verschleißregelbereich.

Die Hinterachsbremse wird, da sie heißer ist als die Vorderachsbremse, bei gleichem Bremsdruck weniger Bremskraft erzeugen. Aufgrund des erwähnten Regelungszieles des EBS-Systems (Differenzschlupf Null) wird in die Hinterachsbremse durch die EBS-Regelung mehr Bremsdruck eingesteuert. Die Hinterachsbremse wird also noch heißer mit der Gefahr einer Überhitzung und eines dadurch bedingten Ausfalls der Bremse.

Die US-A-4 790 606 betrifft eine Einrichtung, die eine Messung und Regelung eines Bremsmomentes einer Bremseinheit im Dauerbetrieb durchführt. Die Bremseinheit beinhaltet sowohl ein bremsbares Element als auch ein Bremsgerät. Ein Ausgangssignal wenigstens eines temperaturabhängigen Messelements, das an oder in einem der bremsbaren Elemente und dem Bremsgerät angeordnet ist, wird einem Auswertegerät zugeführt. Das Auswertegerät wertet die fortlaufenden Werte des Ausgangssignals des temperaturabhängigen Elements aus, bestimmt daraus ein jeweiliges Bremsmoment und regelt dieses Moment nach Bedarf. Auch eine Überlagerung mit einer lastabhängigen Bremsmomentenregelung ist möglich.

Die DE 100 12 448 A betrifft ein Verfahren zur Bremskraftverteilung bei Fahrzeugen mit mindestens zwei bremsbaren Achsen, bei dem während eines Bremsvorgangs eine Überhitzung, eine Überhitzungsgefahr bzw. eine Situation mit einer Überhitzung oder Überhitzungsgefahr der Radbremsen anhand bestimmter Kriterien oder Hinweise ermittelt wird und bei einer erkannten Überhitzung, Überhitzungsgefahr bzw. Situation mit einer Überhitzung oder Überhitzungsgefahr die Radbremsen an einer vorderen Achse und an einer hinteren Achse abwechselnd mit Bremskraft beaufschlagt werden, zwecks Abkühlung der aktuell nicht mit Bremskraft beaufschlagten Radbremsen einer Achse.

Die DE 42 08 581 betrifft eine Bremsdruck-Steuereinrichtung zur variablen Einstellung der Vorderachs-/Hinterachs-Bremskraftverteilung an einem Straßenfahrzeug mit Hinterachs-Antrieb und Vorderachs-/Hinterachs-Bremskraftaufteilung seiner hydraulischen Zweikreis-Bremsanlage, die mit einem Antriebsschlupf-Regelungssystem kombiniert wird. Gemäß dieser Druckschrift soll eine Kombination der hydraulischen Bremsanlage mit dem Antriebsschlupf-Regelungssystem unter Beibehaltung des gewohnten Bedienungskomforts der Bremsanlage ermöglicht werden. Als Nebenbedingung sieht die dortige Bremsanlage eine temperaturabhängige Bremskraft-Verteilungs-Steuerung vor.

Die DE 42 24 971 A betrifft ein Verfahren zur Erhöhung der Funktionssicherheit einer Bremsanlage mit elektronischer Regelung der Bremskraftverteilung, bei dem während eines Bremsvorganges die Vorderräder mit einem kurzen Druckabbauimpuls, der für das Bremsgeschehen vernachlässigbar ist, beaufschlagt werden und die Reaktion der Vorderräder auf den Druckabbaupuls ermittelt wird. Lässt die Reaktion auf eine Verstimmung der Vorderradbremsen oder auf einen Defekt schließen, wird die Begrenzung des Druckanstiegs in den Radbremsen der Hinterräder, die eine Auswirkung der Regelung der Bremskraftverteilung ist, aufgehoben.

Die EP-A-0 288 846 betrifft ein Bremssteuersystem für ein Fahrzeug, bei dem eine Sensierung der Größe des Bremswunschs des Fahrers erfolgt und bei dem eine Verteilung des Bremskraftaufwandes zwischen einzeln steuerbaren Bremsenteilen des Fahrzeuges erfolgt, wobei bei relativ geringem Fahrerbremswunsch eine ausbalancierte Bremswirkung und bei relativ hohem Fahrerbremswunsch eine proportionale Bremswirkung erzeugt werden. Des weiteren können Temperatursensoren zur Ermittlung der Bremsentemperaturen vorgesehen sein. In Abhängigkeit der Temperatursignale der Temperatursensoren ist eine temperaturabhängige Verteilung der Bremswirkung vorgesehen.

Die Aufgabe der vorliegenden Erfindung besteht deshalb darin, ein Verfahren der eingangs genannten Art so auszubilden, dass bei einem Bremsvorgang die Gefahr einer Überhitzung und eines dadurch bedingten Ausfalls einer Bremse vermieden ist. Außerdem soll eine Anordnung zur Durchführung des Verfahrens angegeben werden.

Diese Aufgabe wird durch die Erfindung gemäß Anspruch 1 gelöst. Eine Anordnung zur Durchführung des erfindungsgemäßen Verfahrens ist im Anspruch 7 angegeben.

Vorteilhafte und zweckmäßige Weiterbildungen sind in den Unteransprüchen angegeben.

Die Erfindung schlägt zur Lösung der Aufgabe vor, neben den bisher üblichen Verschleiß- und Adhäsionsregelkriterien Radbremsentemperaturregelkriterien vorzusehen, derart, dass bei Radbremsentemperaturen über einem vorgegebenen Grenzwert bei einem Bremsvorgang die Zuspannenergieverteilung in Richtung der Radbremsen mit der niedrigeren Temperatur verändert wird, d. h., dass in die Radbremsen mit den niedrigeren Temperaturen eine höhere Zuspannenergie und in die Radbremsen mit den höheren Temperaturen eine niedrigere Zuspannenergie eingesteuert wird als vor der Überschreitung der Grenzwerte. Dieses kann gesamtbremskraftneutral, ggf. aber auch gesamtbremskraftverringernd erfolgen. Die Radbremse mit der höheren Temperatur wird also geringer belastet als vor der Grenzwertüberschreitung, um auf diese Weise den Temperaturunterschied zwischen den Radbremsen zu verringern. Es wird also in diesem Falle nicht auf den Differenzschlupf Null geregelt; es wird stattdessen in solch einem Fall ein Differenzschlupf ungleich Null zugelassen.

Dies ist erfindungsgemäß regelungstechnisch dadurch erreichbar, dass der Differenzschlupfschwellwert für den Belagverschleißregelbereich und der Fahrer-Sollbremswert zum Wechsel in den Adhäsionsregelbereich angehoben werden. Je höher die Temperatur, desto später erfolgt der Übergang in den Adhäsionsregelbereich und desto mehr wird die heiße Radbremse geschont.

Der Übergang in den Adhäsionsregelbereich kann außer bei einem vorbestimmbaren höheren Fahrer-Sollbremswert vorzugsweise in Abhängigkeit von der Radbremsentemperatursozusagen fließend erfolgen nach der allgemeinen mathematischen Formel: Übergangswert = f (Radbremsentemperatur).

Es kann eine separate, zusätzliche Energieverteilungsberechnung mit den Variablen Hinterachsradbremsentemperatur und Vorderachsradbremsentemperatur vorgesehen sein und ggf. Radbremsentemperaturen weiterer Achsen, wenn solche weiteren bremsbaren Achsen vorhanden sind.

Zusätzlich zur radbremsentemperaturabhängigen Regelung der Zuspannenergie kann ein Warnsignal für den Fahrer ausgegeben werden über ein Bremspedalfeeling oder über eine optische oder akustische Anzeige.

Durch die Erfindung werden die Radbremsen vor thermischen Schäden geschützt und der Bremsbelagverschleiß wird verringert. Die an einzelnen Achsen auftretenden Spitzentemperaturen bei Bremsvorgängen werden verringert, was z. B. für Gefahrgutfahrzeuge von Bedeutung ist.

Der Begriff "Zuspannenergie" wird als Sammelbegriff für alle physikalischen Größen verstanden, bei deren Zufuhr eine Bremse eine Bremskraft erzeugt. Als Zuspannenergie kommen bspw. elektrische Größen, wie Strom und Spannung, oder mechanische Größen, wie Druck, in Betracht. Im Falle von Druck als Zuspannenergie sind als Energieträger flüssige oder gasförmige Druckmittel, bspw. Druckluft, gebräuchlich.

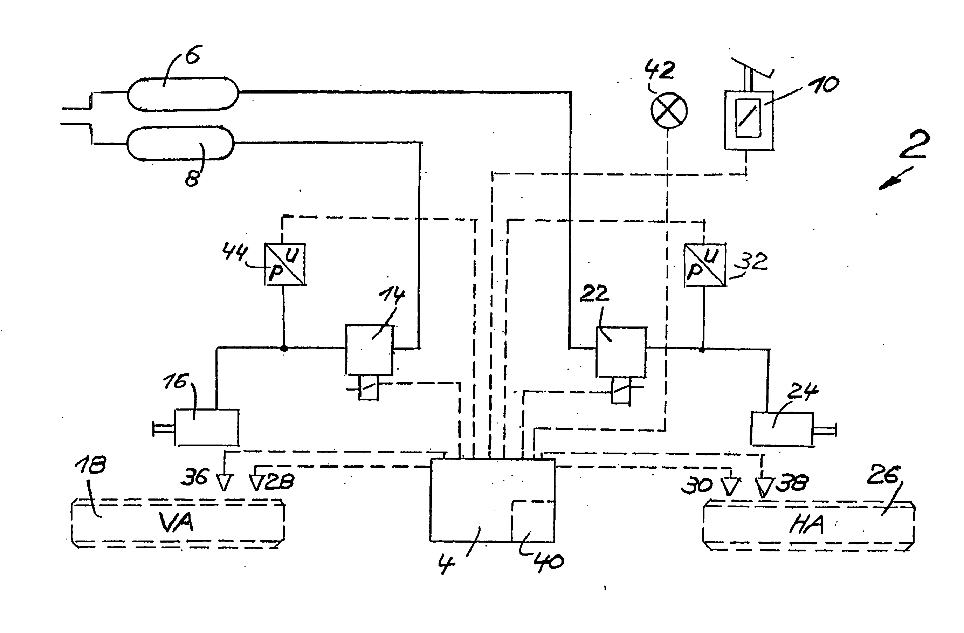

Die Erfindung soll nachfolgend anhand der beigefügten Zeichnung näher erläutert werden, die als Beispiel schematisch ein Fahrzeug mit einer EBS-Bremsanlage sowie einer erfindungsgemäßen Einrichtung zur temperaturabhängigen Regelung des Bremsdruckes zeigt.

Die Zeichnung zeigt schematisch ein Fahrzeug mit einer bspw. pneumatisch betriebenen EBS-Bremsanlage 2 mit einem Zentralsteuergerät 4 für die Zuspannenergie-Regelung, in das i. A. auch das Antiblockierregelsystem integriert ist. Energieleitungen, bspw. Druckleitungen, sind mit durchgezogenen Linien und elektrische Leitungen mit gestrichelten Linien eingezeichnet. Es sind nur die Räder und zugehörige Bauteile, bspw. pneumatische Bauteile, einer Seite der Vorderachse VA und der Hinterachse HA des Fahrzeuges dargestellt.

Die zur Betätigung der Bremsen benötigte Energie, bspw. Druckluft, wird in Energiespeichern 6, 8, bspw. Druckluftbehältern, bereit gestellt. Über einen Fahrer-Bremswertgeber 10 gibt der Fahrer dem EBS-System einen Sollwert vor. Der Bremskreis ist hier zweikreisig ausgebildet und führt zum einen über einen Energiezuteiler 14, bspw. Druckmodulator, zu einer Zuspanneinrichtung 16, bspw. Bremszylinder, für ein Rad mit Radbremse 18 der Vorderachse (VA). Der andere Bremskreis führt über einen weiteren Energiezuteiler 22, bspw. Druckmodulator, zu einer Zuspanneinrichtung 24, bspw. Bremszylinder, für ein Rad mit Radbremse 26 der Hinterachse (HA). Das Antiblockiersystem erhält über Radsensoren 28, 30 Informationen über das Drehverhalten der Räder. Sollten diese eine Blockierneigung zeigen, gibt das Steuergerät 4 bzw. das in das Steuergerät integrierte ABS-System in bekannter Weise elektrische Signale an die Energiezuteiler 14, 22, bspw. Druckmodulatoren, aus, welche die Zuspannenergie, bspw. den Bremsdruck, herabsetzen und somit die Blockierneigung wieder beseitigen können.

Die Zentralsteuereinheit 4 besitzt Eingänge für Energiesensoren 32, 44, bspw. Drucksensoren, zur Ermittlung der Zuspannenergie, bspw. des Bremsdruckes, in den Zuspanneinrichtungen 16, 24, bspw. Bremszylindern, der Vorder- und Hinterachse.

Die Zentralsteuereinheit 4 weist ferner Eingänge für Einrichtungen 36, 38 zur vorzugsweise ständigen Ermittlung der Temperaturen der Radbremsen, bspw. Temperatursensoren, auf. In der Zentralsteuereinheit 4 werden die ermittelten Temperaturen der Radbremsen der Räder der Vorderachse und der Hinterachse miteinander und mit einem vorbestimmten Temperaturgrenzwert verglichen. Wird festgestellt, dass die Temperaturen den Temperaturgrenzwert bei einem Bremsvorgang überschreiten, wird die Energieverteilung, bspw. Druckverteilung, zwischen den Radbremsen so gewählt, dass in die Radbremsen mit den höheren Temperaturen eine geringere Zuspannenergie, bspw. ein geringerer Bremsdruck, und in die Radbremsen mit den niedrigeren Temperaturen eine höhere Zuspannenergie, bspw. ein höherer Bremsdruck, eingesteuert wird als vor dem Überschreiten des Grenzwertes. Wenn bspw. die Temperatur der Hinterachsbremsen den Grenzwert überschreitet und höher ist als die Temperatur der Vorderachsbremsen, werden also die Hinterachsbremsen geringer belastet als vor dem Überschreiten des Temperaturgrenzwertes, um auf diese Weise den Temperaturunterschied zwischen den Achsen zu verringern. Hierzu kann eine geeignete zusätzliche elektronische Einrichtung 40 im Zentralsteuergerät 4 und/oder eine entsprechende Programmerweiterung im Zentralsteuergerät enthaltenen Mikroprozessoren vorgesehen sein. Die entsprechende Zuspannenergieverteilung zwischen den Radbremsen, bspw. durch verringerte Druckeinsteuerung in die Bremszylinder der heißeren Bremsen, erfolgt vorzugsweise über die Energiezuteiler 14, 22, bspw. Druckmodulatoren, des EBS-Systems, kann aber auch über gesonderte Energiezuteiler (nicht dargestellt) erfolgen.

Das Programm des EBS-Systems kann dahingehend erweitert werden, dass ein radbremsentemperaturabhängiges Heraufsetzen des Differenzschlupfschwellwertes innerhalb des Belagverschleißregelbereiches und ein radbremsentemperaturabhängiges Heraufsetzen des Fahrer-Sollgrenzwertes zum Wechseln in den Adhäsionsregelbereich realisiert werden. Je höher die Temperatur, desto später erfolgt der Übergang vom Belagverschleißregelbereich in den Adhäsionsregelbereich, desto mehr wird bspw. eine heißere Hinterachsbremse relativ geschont.

Der Übergang in den Adhäsionsregelbereich kann auch nach einer mathematischen Funktion Übergangswert = f (Radbremsentemperatur) erfolgen, also nicht bei einem bestimmten heraufgesetzten Grenzwert sondern temperaturabhängig.

Sonstige radbremsentemperaturerhöhenden Regelungsvorgänge, bspw. ASR-Regelvorgänge, werden selbstverständlich mit berücksichtigt.

Zusätzlich ist vorzugsweise parallel zur temperaturabhängigen Bremsregelung eine Warnung des Fahrers sowohl über das Pedalfeeling als auch über eine Anzeige (optisch und/oder akustisch) 42 vorgesehen.

Die Temperatur kann auf verschiedene Weise direkt oder indirekt über Temperaturmodelle erfasst werden:
- Ermittlung der Temperatur mit Hilfe von Temperatursensoren, die in unmittelbarer Nähe eines der Bremselemente, bspw. der Bremsscheibe, angeordnet sind,
- Ermittlung der Temperatur über ein den Belastungszustand der Bremse repräsentierendes Lastsignal, das die Fahrzeuggeschwindigkeit mit der Anpresskraft der Bremsscheibe verknüpft, woraus die resultierende Temperaturerhöhung der Bremsscheibe ermittelt und ein voreingestellter Temperatureingangswert entsprechend erhöht wird,
- Ermittlung der Temperatur durch Berechnung der Wärmeenergiezufuhr zu der Bremse aus der Abnahme der kinetischen Energie des Fahrzeugs beim Bremsvorgang,
- Ermittlung der Temperatur aus der Verformung von Bauteilen der Bremse,
- Ermittlung der Temperatur aus der momentanen Fahrzeugverzögerung und der Fahrzeuggeschwindigkeit,
- Auswahl eines Bauteils, dessen Temperatur ermittelt wird, derart, dass diese Temperatur den thermischen Belastungsstand der Bremse wiederspiegelt, woraus auf die Temperatur geschlossen werden kann.

## Patentansprüche

1. Verfahren zur Zuspannenergieregelung bei elektronisch geregelten Bremssystemen (2) von Fahrzeugen mit mindestens einer Vorderachse (VA) und einer Hinterachse (HA),
- wobei vom Fahrer ein Sollbremswert vorgebbar ist,
- wobei das elektronisch geregelte Bremssystem (2) im Bereich geringer Sollbremswerte Bremsdrücke aussteuert, die nach Belagverschleiß-Regelkriterien berechnet werden,
- wobei das elektronisch geregelte Bremssystem (2) bei höheren Sollbremswerten oder bei Erreichen bestimmter Differenzschlupfschwellen Bremsdrücke aussteuert, die nach Adhäsions-Kriterien mit dem Ziel gleichen Bremsschlupfs für alle Räder berechnet werden,
- wobei die Temperaturen der Radbremsen (18, 26) der Räder der Vorderachse (VA) und der Hinterachse (HA) ermittelt und miteinander und mit einem vorbestimmten Temperaturgrenzwert verglichen werden und
- wobei bei Überschreitung des Temperaturgrenzwertes bei einem Bremsvorgang eine geringere Zuspannenergie in die Radbremsen (18, 26) mit den höheren Temperaturen und eine höhere Zuspannenergie in die Radbremsen (18, 26) mit den niedrigeren Temperaturen eingesteuert wird als vor dem Überschreiten des Temperaturgrenzwertes.

2. Verfahren nach Anspruch 1, **dadurch gekennzeichnet, dass** bei Überschreitung des Temperaturgrenzwertes ein Differenzschlupfschwellwert für eine Belagverschleißregelung und/oder ein Fahrer-Sollbremswert für den Übergang von der Belagverschleißregelung zu der Adhäsionsregelung des elektronisch geregelten Bremssystems (2) erhöht werden.

3. Verfahren nach einem der vorhergehenden Ansprüche, **dadurch gekennzeichnet, dass** der Übergang in den Adhäsionsregelbereich in Abhängigkeit von der Höhe der ermittelten Radbremsentemperaturen erfolgt.

4. Verfahren nach einem der vorhergehenden Ansprüche, **dadurch gekennzeichnet, dass** eine temperaturabhängige Energieverteilung zwischen den Radbremsen (18, 26) der Vorderachse (VA) und Hinterachse (HA) durch das elektronisch geregelte Bremssystem (2) oder durch eine separate Energieverteilungseinrichtung erfolgt.

5. Verfahren nach einem der Ansprüche 1 bis 4, **dadurch gekennzeichnet, dass** für die temperaturabhängige Energieverteilung zwischen den Radbremsen (18, 26) eine entsprechende Programmerweiterung im Zentralsteuergerät (4) des elektronisch geregelten Bremssystems (2) vorgesehen ist.

6. Verfahren nach einem der vorhergehenden Ansprüche, **dadurch gekennzeichnet, dass** zusätzlich ein Warnsignal (Bremspedalfeeling und/oder optische und/oder akustische Anzeige) ausgegeben wird.

7. Anordnung zur Durchführung eines Verfahrens zur Zuspannenergieregelung bei elektronisch geregelten Bremssystemen (2) von Fahrzeugen mit mindestens einer Vorderachse (VA) und einer Hinterachse (HA),
- wobei vom Fahrer ein Sollbremswert vorgebbar ist,
- wobei das elektronisch geregelte Bremssystem (2) im Bereich geringer Sollbremswerte Bremsdrücke aussteuert, die nach Belagverschleiß-Regelkriterien berechnet werden,
- wobei das elektronisch geregelte Bremssystem (2) bei höheren Sollbremswerten oder bei Erreichen bestimmter Differenzschlupfschwellen Bremsdrücke aussteuert, die nach Adhäsions-Kriterien mit dem Ziel gleichen Bremsschlupfs für alle Räder berechnet werden,
- wobei Einrichtungen (36, 38) zur Ermittlung der Temperaturen der Radbremsen (18, 26) der Vorderachse (VA) und Hinterachse (HA) vorgesehen sind, deren Signale im Zentralsteuergerät (4) des EBS-Systems oder in einer separaten Auswerteeinrichtung (40) miteinander und mit einem vorbestimmten Temperaturgrenzwert verglichen werden, und
- wobei das Zentralsteuergerät (4) oder die separate Auswerteeinrichtung (40) Steuersignale abgibt, wenn die gemessenen Temperaturen den Grenzwert bei einem Bremsvorgang überschreiten, durch die eine geringere Zuspannenergie in die Radbremsen (18, 26) mit den höheren Temperaturen und eine höhere Zuspannenergie in die Radbremsen (18, 26) mit den niedrigeren Temperaturen eingesteuert wird als vor dem Überschreiten des Temperaturgrenzwertes.

8. Anordnung nach Anspruch 7, **dadurch gekennzeichnet, dass** in einem elektronisch geregelten Bremssystem mit einer Belagverschleißregelung und einer Adhäsionsregelung das Zentralsteuergerät (4) bei Überschreiten des Temperaturgrenzwertes per Programm einen Differenzschlupfschwellwert für die Belagverschleißregelung und/oder einen Fahrer-Sollbremswert für den Übergang von der Belagverschleißregelung in die Adhäsionsregelung erhöht.

9. Anordnung nach Anspruch 7 oder 8, **dadurch gekennzeichnet, dass** die Temperatur der Radbremsen (18, 26) mittels Temperatursensoren (36, 38) ermittelt oder nach einem Temperaturmodell unter Berücksichtigung eines den Belastungszustand der Bremse repräsentierenden Lastsignals oder der Wärmeenergiezufuhr zu der Bremse oder der Verformung von Bauteilen der Bremse oder der momentanen Fahrzeugverzögerung und der Fahrzeuggeschwindigkeit oder anderer geeigneter Parameter berechnet wird.

## Claims

1. Method for controlling application energy in electronically controlled braking systems (2) of vehicles having at least one front axle (FA) and at least one rear axle (RA),
- wherein a desired braking value can be preset by the driver,
- wherein, in the region of low desired braking values, the electronically controlled braking system (2) sets brake pressures calculated in accordance with lining wear control criteria,
- wherein, at higher desired braking values or when certain differential slippage thresholds have been reached, the electronically controlled braking system (2) sets brake pressures calculated in accordance with adhesion criteria ensuring the same wheel slip for all the wheels,
- wherein the temperatures of the wheel brakes (18, 26) of the wheels of the front axle (FA) and of the rear axle (RA) are ascertained and compared with one another and with a predetermined temperature limit value, and
- wherein, when the temperature limit value is exceeded in a braking operation, a lower application energy is controlledly supplied to the wheel brakes (18, 26) having the higher temperatures and a higher application energy is controlledly supplied to the wheel brakes (18, 26) having the lower temperatures.

2. Method according to claim 1, **characterized in that**, when the temperature limit value is exceeded, a differential slippage threshold for lining wear control and/or a driver's desired braking value is/are increased for the transition from lining wear control to adhesion control of the electronically controlled braking system (2).

3. Method according to any one of the preceding claims, **characterized in that** the transition to the adhesion control range is effected in dependence upon the level of the wheel brake temperatures ascertained.

4. Method according to any one of the preceding claims, **characterized in that** a temperature-dependent distribution of energy between the wheel brakes (18, 26) of the front axle (FA) and of the rear axle (RA) is effected by the electronically controlled braking system (2) or by a separate energy distribution device.

5. Method according to any one of claims 1 to 4, **characterized in that** for the temperature-dependent energy distribution between the wheel brakes (18, 26) there is provided a corresponding program extension in the central control unit (4) of the electronically controlled braking system (2).

6. Method according to any one of the preceding claims, **characterized in that** additionally a warning signal (feel of the brake pedal and/or a visual and/or audible indicator) is produced.

7. Arrangement for implementing a method for controlling application energy in electronically controlled braking systems (2) of vehicles having at least one front axle (FA) and at least one rear axle (RA),
- wherein a desired braking value can be preset by the driver,
- wherein, in the region of low desired braking values, the electronically controlled braking system (2) sets brake pressures calculated in accordance with lining wear control criteria,
- wherein, at higher desired braking values or when certain differential slippage thresholds have been reached, the electronically controlled braking system (2) sets brake pressures calculated in accordance with adhesion criteria ensuring the same wheel slip for all the wheels,
- wherein devices (36, 38) for ascertaining the temperatures of the wheel brakes (18, 26) of the front axle (FA) and of the rear axle (RA) are provided, the signals from which are compared with one another and with a predetermined temperature limit value in the central control unit (4) of the EBS or in a separate evaluating device (40), and
- wherein the central control unit (4) or the separate evaluating device (40) produces control signals when the temperatures measured exceed the limit value in a braking operation, as a result of which control signals, a lower application energy is controlledly supplied to the wheel brakes (18, 26) having the higher temperatures and a higher application energy is controlledly supplied to the wheel brakes (18, 26) having the lower temperatures.

8. Arrangement according to claim 7, **characterized in that**, in an electronically controlled braking system having lining wear control and adhesion control, when the temperature limit value is exceeded, the central control unit (4) increases a differential slippage threshold for the lining wear control and/or a driver's desired braking value by program means for the transition from lining wear control to adhesion control.

9. Arrangement according to claim 7 or claim 8, **characterized in that** the temperature of the wheel brakes (18, 26) is ascertained by means of temperature sensors (36, 38) or is calculated using a temperature model taking into consideration a load signal representing the loading state of the brake or the heat energy supplied to the brake or the deformation of components of the brake or the momentary deceleration of the vehicle and the vehicle speed or of other suitable parameters.

## Revendications

1. Procédé de commande d'énergie d'actionnement de frein dans des systèmes de freinage à commande électronique (2) de véhicules comportant au moins un essieu avant (VA) et un essieu arrière (HA),
- dans lequel une valeur de freinage de consigne peut être déterminée par le conducteur,
- dans lequel le système de freinage à commande électronique (2) règle les pressions de freinage, qui sont calculées d'après des critères de régulation d'usure de garniture de frein, dans la zone des valeurs de freinage de consigne faibles,
- dans lequel le système de freinage à commande électronique (2) règle les pressions de freinage, qui sont calculées selon des critères d'adhérence avec pour but le même glissement au freinage pour toutes les roues, dans le cas de valeurs de freinage de consigne très élevées ou en atteignant des seuils de glissement différentiel déterminés,
- dans lequel les températures des freins de roue (18, 26) des roues de l'essieu avant (VA) et de l'essieu arrière (HA) sont détectées et comparées entre elles et à une valeur limite de température prédéterminée, et
- dans lequel, dans le cas d'un dépassement de la valeur limite de température lors d'un processus de freinage, une énergie d'actionnement de frein faible est modulée dans les freins de roue (18, 26) avec des températures très élevées et une énergie d'actionnement de frein plus élevée est modulée dans les freins de roue (18, 26) avec des températures plus faibles qu'avant le dépassement de la valeur limite de température.

2. Procédé selon la revendication 1, **caractérisé en ce que**, lors du dépassement de la valeur limite de température, une valeur de seuil de glissement différentiel pour une régulation de l'usure de garniture et/ou une valeur de freinage de consigne de conducteur pour le passage de la régulation d'usure de garniture à la régulation d'adhérence du système de freinage à commande électronique (2) sont augmentées.

3. Procédé selon l'une des revendications précédentes, **caractérisé en ce que** le passage dans la zone de régulation d'adhérence s'effectue en fonction de la hauteur des températures de freins de roue détectées.

4. Procédé selon l'une des revendications précédentes, **caractérisé en ce qu'**une répartition d'énergie en fonction de la température entre les freins de roue (18, 26) de l'essieu avant (VA) et de l'essieu arrière (HA) s'effectue par le système de freinage à commande électronique (2) ou par un dispositif de répartition d'énergie distinct.

5. Procédé selon l'une des revendications 1 à 4, **caractérisé en ce que**, pour la répartition d'énergie en fonction de la température entre les freins de roue (18, 26), une mise à jour du programme appropriée est prévue dans l'unité de commande centrale (4) du système de freinage à commande électronique (2).

6. Procédé selon l'une des revendications précédentes, **caractérisé en ce qu'**en plus un signal d'avertissement (sensation de la pédale de frein et/ou témoin optique et/ou acoustique) est délivré.

7. Dispositif en vue de la réalisation d'un procédé de commande d'énergie d'actionnement de frein dans des systèmes de freinage à commande électronique (2) de véhicules comportant au moins un essieu avant (VA) et un essieu arrière (HA),
- dans lequel une valeur de freinage de consigne peut être détectée par le conducteur,
- dans lequel le système de freinage à commande électronique (2) règle les pressions de freinage, qui sont calculées d'après des critères de régulation d'usure de garniture, dans la zone des valeurs de freinage de consigne faibles,
- dans lequel le système de freinage à commande électronique (2) règle les pressions de freinage, qui sont calculées d'après des critères d'adhérence ayant pour but le même glissement au freinage pour toutes les roues, dans le cas de valeurs de freinage de consigne très élevées ou en atteignant des seuils de glissement différentiel,
- dans lequel des dispositifs (36, 38) sont prévus pour détecter les températures des freins de roue (18, 26) de l'essieu avant (VA) et de l'essieu arrière (HA), dont les signaux sont comparés entre eux et à une valeur limite de température prédéterminée dans l'unité de commande centrale (4) du système EBS ou dans un autre dispositif d'évaluation distinct (40), et
- dans lequel l'unité de commande centrale (4) ou le dispositif d'évaluation distinct (40) délivre des signaux de commande, lorsque les températures mesurées dépassent la valeur limite lors d'un processus de freinage, grâce auxquelles une énergie d'actionnement de frein faible dans les freins de roue (18, 26) est modulée avec des températures plus élevées et une énergie d'actionnement de frein plus élevée dans les freins de roue (18, 26) est modulée avec des températures plus faibles qu'avant le dépassement de la valeur de seuil de température.

8. Dispositif selon la revendication 7, **caractérisé en ce que**, dans le système de freinage à commande électronique comportant une régulation d'usure de garniture et une régulation d'adhérence, l'unité de commande centrale (4) élève par programme une valeur de seuil de glissement différentiel pour la régulation d'usure de garniture et/ou une valeur de freinage de consigne de conducteur pour le passage de la régulation d'usure de garniture à la régulation d'adhérence lors du dépassement de la valeur limite de température.

9. Dispositif selon la revendication 7 ou 8,
**caractérisé en ce que** la température des freins de roue (18, 26) est détectée par des capteurs de température (36, 38) ou est calculée d'après un modèle de température en tenant compte d'un signal de charge représentant l'état de charge des freins ou la délivrance d'énergie thermique aux freins ou la déformation des composants des freins ou le ralentissement momentané du véhicule et la vitesse du véhicule ou d'autres paramètres appropriés.
